# FASCICULE DE BREVET EUROPEEN

(11) **EP 4 511 610 B1**
(45) Date de publication et mention de la délivrance du brevet: **11.11.2026**
(21) Numéro de dépôt: 22725520.5
(22) Date de dépôt: 22.04.2022
(51) Int. Cl.: G01B 9/02091, G02B 21/00

(54) **MODULE DESTINÉ À ÊTRE ASSOCIÉ À UN MICROSCOPE, ENSEMBLE D'UN MICROSCOPE ET D'UN TEL MODULE**
MODUL ZUR VERBINDUNG MIT EINEM MIKROSKOP UND ANORDNUNG AUS EINEM MIKROSKOP UND SOLCH EINEM MODUL
MODULE INTENDED TO BE ASSOCIATED WITH A MICROSCOPE, AND ASSEMBLY FORMED BY A MICROSCOPE AND SUCH A MODULE

(43) Date de publication de la demande: 26.02.2025
(73) Titulaire: SORBONNE UNIVERSITE, 75006 Paris (FR); Centre National de la Recherche Scientifique, 75016 Paris (FR); INSTITUT NATIONAL DE LA SANTE ET DE LA RECHERCHE MEDICALE (INSERM), 75013 Paris (FR); Ecole Supérieure de Physique et de Chimie Industrielles de la Ville de Paris, 75005 Paris (FR); Centre Hospitalier National D'ophtalmologie Des Quinze-Vingts, 75012 Paris (FR)
(72) Inventeur: GRIEVE, Kate, 75012 PARIS (FR); THOUVENIN, Olivier, 75005 PARIS (FR); MONFORT, Tual, 75012 PARIS (FR); AZZOLLINI, Salvatore, 75012 PARIS (FR); REICHMAN, Sacha, 75012 PARIS (FR)
(74) Mandataire: Cabinet Boettcher
(86) Numéro de dépôt international: PCT/FR2022/000042
(87) Numéro de publication internationale: WO 2023/203283

(56) Documents cités:
- WO-A1-2021/110595
- US-A1- 2016 320 598

## Description

L'invention concerne un module destiné à être associé à un microscope pour une imagerie microscopique de tomographie à cohérence optique en plein champ d'au moins un échantillon.

L'invention concerne également un ensemble d'un tel module et d'un microscope.

### ARRIERE PLAN DE L'INVENTION

L'émergence récente de la technologie de la culture cellulaire en trois dimensions, permet d'émuler plus précisément la physiologie humaine, comparée à la traditionnelle culture cellulaire en deux dimensions, sur laquelle repose actuellement un bon nombre de développements pharmaceutiques et autre applications biomédicales (greffe de tissus, etc.).

Dans ce domaine, l'émergence récente de la technologie d'organoïde s'avère particulièrement prometteuse puisqu'elle permet de palier au moins en partie aux difficultés liées à la création de tissue humain en trois dimensions répliquant notamment les conditions physiologiques in vivo. De plus, cette technologie d'organoïde permet de produire de manière indéfinie du matériel que l'on peut qualifier d'« humain » sans contrainte éthique et pourrait donc, à terme, entrainer la réduction voir le remplacement d'études sur des modèles animaux. Les organoïdes peuvent ainsi être utilisé pour la modélisation de maladies, pour effectuer des tests d'efficacité de nouveaux traitements (géniques, pharmaceutiques, etc.), pour une greffe ... Toutefois si la technologie des organoïdes est devenue mature, il s'avère toujours compliqué de pouvoir effectuer de l'imagerie de contrôle avec suffisamment de précision, qui soit non destructive, pour s'assurer du bon fonctionnement de ces organoïdes. En effet, les techniques d'imageries conventionnelles nécessitent la fixation, et donc la destruction ou une altération non réversible des échantillons, ce qui entraine une analyse non-factuelle et peut résulter sur une prise de décision biaisée. De plus, les techniques d'imageries conventionnelles nécessitent la multiplication des échantillons (et donc un surcoût), apporte de la variabilité supplémentaire dans les résultats, et ne permet pas de s'assurer de la viabilité et de la qualité d'un échantillon greffé.

Par ailleurs, il s'avère que l'état de l'art actuel ne permet pas d'effectuer de l'imagerie de contrôle en trois dimensions qui soit suffisamment quantitative pour assurer un niveau de précision cellulaire ou subcellulaire. L'imagerie de tomographie à cohérence optique (plus connue sous l'acronyme anglais OCT pour « Optical Coherence Tomography ») permet de pouvoir acquérir des images avec une plus grande précision. A cet effet, l'imagerie de tomographie à cohérence optique plein champ se base sur l'acquisition de signaux provenant de l'interférence entre un signal d'une lumière rétrodiffusée par un échantillon lorsqu'il est éclairé par une source avec un signal lumineux de référence émis par cette même source. Le document FR 2 817 030 décrit un exemple de système d'imagerie microscopique interférentielle à cohérence optique plein champ.

Malheureusement de tels systèmes s'avèrent relativement peu utilisés du fait de leur complexité et de leur coût. Le document WO 2021110595 illustre l'art antérieur de l'invention.OBJET DE L'INVENTION L'invention a notamment pour but de permettre une imagerie microscopique de tomographie à cohérence optique en plein champ d'au moins un échantillon qui soit aisée à mettre en œuvre.

### RESUME DE L'INVENTION

A cet effet, on prévoit, selon l'invention un module destiné à être associé à un microscope pour une imagerie microscopique de tomographie à cohérence optique en plein champ d'au moins un échantillon, le module comprenant un dispositif d'interférence comprenant un élément séparateur de faisceaux non polarisant, le dispositif comprenant par ailleurs une surface de réflexion, le dispositif étant ainsi apte en service à permettre la production d'au moins une interférence entre :
- au moins une onde de référence obtenue par réflexion de la lumière émise par une source lumineuse associée au module sur la surface de réflexion, et
- au moins une onde objet obtenue par rétrodiffusion de la lumière émise par ladite source sur l'échantillon,
l'élément séparateur de faisceaux non polarisant permettant ainsi en service de former deux bras, lors de son éclairement par la source, à savoir un « bras de référence » associé à la surface de réflexion et un « bras objet » associé à l'échantillon, le dispositif comprenant par ailleurs :
- une première unité de réglage agencée en amont de l'élément séparateur de faisceaux non polarisant pour pouvoir modifier en service un bras d'éclairage de l'élément séparateur de faisceaux non polarisant, et/ou
- au moins une deuxième unité de réglage agencée entre l'élément séparateur de faisceaux et la surface de réflexion pour pouvoir modifier en service le bras de référence.

De la sorte, l'invention peut être couplée à un microscope existant pour pouvoir réaliser de l'imagerie microscopique de tomographie à cohérence optique en plein champ. Il suffit d'associer l'invention au microscope puis de s'aider de la ou des unités de réglage pour assurer l'interférence entre les ondes de référence et les ondes objet.

Par exemple, la deuxième unité est réglée de sorte que le bras de référence soit identique au bras objet c'est-à-dire que les chemins optiques dans les deux bras soient égaux (à la longueur de cohérence spatiale de la source près) lorsque le microscope est couplé au module.

Par exemple, la première unité est réglée de sorte à aligner, en service, un axe de travail du module (i.e. l'axe selon lequel la majorité des rayons lumineux se propageant sur le bras objet sortent du module pour atteindre le microscope) avec un axe de propagation de la source (i.e. l'axe selon lequel la majorité des rayons lumineux générés par la source se propage).

Ainsi, le recours à une telle imagerie microscopique de tomographie à cohérence optique est facilité pour l'utilisateur puisque celui-ci a déjà l'habitude de manipuler le microscope associé.

En outre, une fois l'invention couplée au microscope et réglée, n'importe quelle personne ayant l'habitude d'utiliser le microscope peut profiter des avantages de l'invention sans avoir à la manipuler. En conséquence, l'invention facilite l'accès à l'imagerie microscopique de tomographie à cohérence optique en plein champ.

De façon avantageuse, il est ainsi possible de coupler l'invention à un microscope conventionnel i.e. un microscope déjà existant sur le marché, par raccordement puis réglage de l'invention audit microscope.

Ceci facilite encore davantage l'accès à l'imagerie microscopique de tomographie à cohérence optique en plein champ, et en particulier à l'imagerie microscopique de tomographie à cohérence optique en plein champ en relation avec un microscope conventionnel (du fait que l'utilisateur n'a plus à se préoccuper de l'invention une fois celle-ci couplée au microscope).

En outre, l'invention permet astucieusement de pouvoir ainsi profiter des avantages d'un microscope conventionnel comme par exemple les caractéristiques d'imagerie particulières (imagerie sous lumière visible, imagerie en fluorescence ...), des objectifs particuliers ... En particulier, le microscope associé peut être un microscope pour lequel d'autres modules optiques [module de contraste interférentiel différentiel plus connu sous l'acronyme anglais de module DIC (pour Differential Interference Contrast), module de diffusion de Raman anti-Stokes cohérente plus connu sous l'acronyme module CARS (pour Coherent Anti-Stokes Raman Scattering), module de génération de second harmonique plus connu sous l'acronyme anglais de module SHG (pour Second Harmonic Generation), module de génération de troisième harmonique plus connu sous l'acronyme anglais de module THG (pour Third Harmonic Generation), module Raman, module de fluorescence à un ou deux photons ...] ont déjà pu être développés. Le module de l'invention peut ainsi aisément se coupler à ces modules de l'art antérieur ce qui permet d'enrichir les possibilités d'imagerie de l'échantillon. De plus, le microscope associé peut être un microscope pour lequel des accessoires ont déjà été développés de sorte qu'en se raccordant à un tel microscope, l'invention permet de bénéficier des accessoires du microscope. L'invention en pouvant se raccorder à un microscope standard permet ainsi avantageusement d'accéder à de nombreuses options déjà développées pour ce microscope.

De plus, l'invention permet de pouvoir mettre en œuvre différents types d'imagerie microscopique de tomographie à cohérence optique en plein champ. En particulier, l'invention peut ainsi tout aussi bien permettre de réaliser de l'imagerie de tomographie à cohérence optique plein champ (plus connue sous l'acronyme anglais FFOCT pour « Full-Field Optical Coherence Tomography ») - c'est-à-dire de l'imagerie dite « statique » - que de l'imagerie de tomographie à cohérence optique plein champ dynamique (plus connue sous l'acronyme D-FFOCT pour « Dynamic FFOCT »). Ainsi l'invention permet par exemple tout aussi bien de pouvoir regarder des éléments présents dans un échantillon (imagerie statique) que des éléments qui composent un tissu d'une desdites structures d'un même échantillon (imagerie dynamique). Les éléments peuvent par exemple être des cellules, des structures et notamment des structures subcellulaires telles que des noyaux, des mitochondries, des pigments ...

L'invention peut donc être employée pour de nombreuses applications et/ou selon des modes de fonctionnement différents (imagerie statique ou imagerie dynamique).

L'invention s'avère ainsi particulièrement modulaire.

Par ailleurs, l'invention permet de réduire le coût d'une imagerie microscopique de tomographie à cohérence optique puisque l'invention vient se greffer à un microscope existant.

Pour la présente invention par « bras de référence » on entend la partie du module située entre la surface de réflexion et l'élément séparateur de faisceaux non polarisant (un rayon lumineux pouvant ainsi se propager dans ledit bras de référence suivant un chemin optique donné).

Pour la présente invention par « bras objet » on entend la partie d'un ensemble formé par le module et le microscope située entre l'échantillon et l'élément séparateur de faisceaux non polarisant (un rayon lumineux pouvant ainsi se propager dans ledit bras objet suivant un chemin optique donné).

Pour la présente invention par « bras d'éclairage » on entend la partie d'un ensemble formé par le module et le microscope située entre la source et l'élément séparateur de faisceaux non polarisant (un rayon lumineux pouvant ainsi se propager dans ledit bras d'éclairage suivant un chemin optique donné).

Pour la présente invention par « modification d'une caractéristique de propagation » on entend par exemple une modification d'une position relative d'un bâti du module vis-à-vis de la source par exemple pour modifier la position relative du bâti vis-à-vis de l'axe de propagation de la source et/ou l'incidence avec laquelle les rayons lumineux générés par la source atteignent l'élément séparateur de faisceaux non polarisant.

Optionnellement, la première unité de réglage comporte au moins deux surfaces de réflexion, au moins une desdites surfaces de réflexion étant déplaçable vis-à-vis d'un bâti du module.

Optionnellement, le module comporte un objectif associé au bras de référence, la deuxième unité de réglage comportant au moins une surface de réflexion additionnel et au moins un organe de déplacement dudit objectif vis-à-vis d'un bâti du module.

Optionnellement la surface de réflexion additionnel et également déplaçable vis-à-vis d'un bâti du module.

Optionnellement l'organe de déplacement est configuré pour déplacer l'objectif au moins dans un plan parallèle au plan dans lequel s'étend la première surface de réflexion. Optionnellement la source fait partie du module.

Optionnellement le module comporte un dispositif d'acquisition adapté pour acquérir au moins un signal résultant des interférences entre les ondes de références et les ondes objet.

Optionnellement le dispositif d'interférence comporte une optique agencée entre l'élément séparateur et une sortie du module destinée à être couplée au moins optiquement le microscope.

L'invention concerne également un ensemble comprenant un microscope et un module tel que précité.

Optionnellement le microscope comporte une tourelle, le module étant agencé dans un des casiers de la tourelle.

Optionnellement l'ensemble comporte un incubateur porté par une platine du microscope.

D'autres caractéristiques et avantages de l'invention ressortiront à la lecture de la description qui suit d'un mode de réalisation particulier et non limitatif de l'invention.

### BREVE DESCRIPTION DES DESSINS

Il sera fait référence au dessin annexé unique pour lequel :

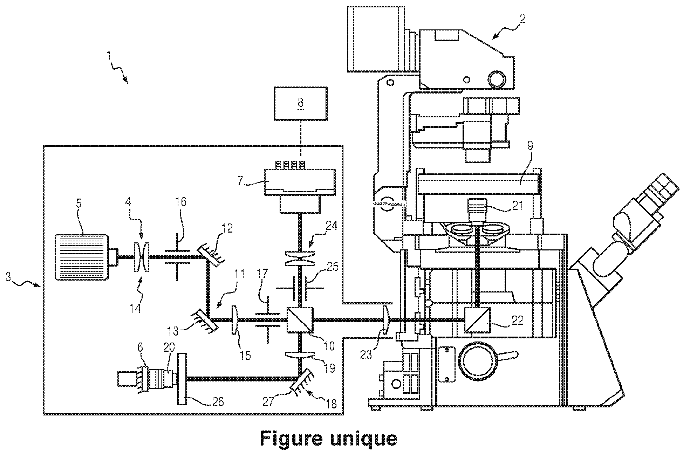

[Fig. 1] est une vue schématique d'un ensemble d'un microscope et d'un module selon un mode de réalisation particulier de l'invention.

### DESCRIPTION DETAILLEE DE L'INVENTION

La figure 1 illustre schématiquement un ensemble d'imagerie microscopique de tomographie à cohérence optique en plein champ d'au moins un échantillon selon un mode de réalisation particulier de l'invention.

L'ensemble 1 comporte ainsi au moins un microscope 2 et un module 3 raccordé au microscope 2.

Par exemple, le module 3 est conformé pour pouvoir être agencé dans un des casiers de la rangée de casiers du microscope 2, rangée formant tourelle.

En conformant le module 3 à un module pouvant être agencé dans un casier du microscope 2, le module 3 se trouve très simplement couplé audit microscope 2 (mécaniquement comme optiquement) par simple insertion du module 3 dans le microscope 2. En particulier, le microscope 2 est conformé de sorte à présenter au moins une sortie optique en regard d'au moins une rangée de sorte que le module inséré dans ladite rangée soit de facto couplé optiquement au microscope 2.

Le microscope 2 est par exemple un microscope inversé. On rappelle ici qu'un microscope inversé est un microscope dans lequel un échantillon est observé par le dessous.

Le microscope est ici avantageusement un microscope conventionnel. Le microscope 2 est par exemple un IX83 commercialisé par la société Olympus.

De façon connue en soi, le microscope 2 comporte une platine destinée à porter un échantillon à observer, la platine étant déplaçable en translation vis-à-vis d'un bâti du microscope 2 selon au moins deux axes de translation.

Comme déjà indiqué, le microscope comporte également une tourelle permettant l'insertion de modules pour interagir avec le microscope 2.

Le module 3 comprend un dispositif d'interférence 4 qui comporte ici une source 5 et une surface de réflexion 6, le dispositif d'interférence 4 étant ainsi apte, en service, à produire des interférences optiques entre :
- des ondes de référence obtenues par réflexion de la lumière émise par la source 5 sur la surface de réflexion 6, et
- des ondes objet obtenues par rétrodiffusion de la lumière émise par ladite source 5 sur l'échantillon.

La source 5 est une source spatialement incohérente ou de faible longueur de cohérence spatiale (soit par exemple dans une gamme de 0.5 à 120 micromètres ou par exemple dans une gamme de 0.8 à 100 micromètres ou par exemple une gamme de 1 à 20 micromètres). La source 5 est par exemple une lampe halogène ou bien une diode électroluminescente (plus connue sous l'acronyme LED) ou bien encore un bloc formé d'une source cohérente (la source cohérente étant par exemple un laser) et d'une structure traversée par les rayons en sortie de la source cohérente, structure permettant de rendre lesdits rayons spatialement incohérents en sortie de la structure (et donc du bloc). La structure est par exemple munie d'une cavité de type multimode, d'une fibre multimode, d'un bâtonnet hexagonal ...

La surface de réflexion 6 est plane. La surface de réflexion 6 est par exemple un miroir.

L'ensemble 1 comporte par ailleurs ici un dispositif d'acquisition 7. Dans le cas présent, le dispositif d'acquisition 7 fait partie du module 3. Le dispositif d'acquisition 7 permet l'acquisition d'au moins un signal résultant des interférences entre les ondes de référence et les ondes objet.

A cet effet, le dispositif d'acquisition 7 comporte un capteur optique. Le capteur optique est de préférence un capteur optique à semi-conducteurs complémentaires à l'oxyde de métal (plus connu sous le terme anglais de CMOS pour Complementarity metal-oxide-semiconductor).

De préférence, le capteur optique est choisi pour acquérir des images à une cadence élevée. Ceci permet de pouvoir suivre, si voulu, une dynamique de mouvements au sein de l'échantillon lorsque celui-ci comporte au moins une cellule vivante. Par exemple le capteur optique est apte à acquérir des images à une fréquence supérieure à 100 Hertz et de préférence supérieure à 200 Hertz et de préférence supérieure à 400 Hertz.

De préférence, le capteur optique est choisi pour acquérir des images selon un rapport signal sur bruit important. Ceci permet au capteur optique d'être sensible mêmes à des structures du vivant très petites et/ou à des mouvements même très petits. Par exemple le capteur optique est apte à acquérir des images avec un rapport signal sur bruit supérieur à 500 et de préférence supérieur à 800 et de préférence supérieur à 1000.

Par exemple le capteur optique est une caméra et par exemple une caméra CMOS et par exemple une caméra Q-2A750 ou une caméra Q-2HFW toutes les deux commercialisées par la société Adimec.

L'ensemble 1 comporte par ailleurs ici un dispositif de traitement du signal 8 émis par le dispositif d'acquisition 7 pour par exemple générer une image d'au moins une partie de l'échantillon. Dans le cas présent, le dispositif de traitement du signal 8 est externe au module 3. Le dispositif de traitement du signal 8 comporte au moins une unité de traitement tel qu'un processeur. Le dispositif de traitement du signal 8 comporte par exemple un ordinateur.

De préférence, l'ensemble 1 comporte un incubateur 9 pour microscope. L'incubateur 9 est par exemple agencé dans le microscope 2 de sorte à être porté par la platine du microscope 2, l'échantillon étant placé directement dans l'incubateur 9.

L'incubateur 9 est de préférence portable pour pouvoir être rapporté de manière temporaire sure le microscope 2.

L'incubateur 9 permet de faciliter l'étude d'échantillons comprenant au moins une cellule vivante. En effet, l'incubateur 9 permet de garder de tels échantillons en vie sur plusieurs jours voire plusieurs semaines.

De préférence, l'incubateur 9 est conformé pour pouvoir recevoir des plaques multi-puits.

De préférence, l'incubateur 9 est équipé d'un contrôle de la température au sein de l'incubateur 9.

Ceci permet par exemple d'éviter un réchauffement de l'échantillon dû notamment à l'éclairage interne du microscope 2 ce qui pourrait altérer ou détruire l'échantillon.

De préférence, l'incubateur 9 est équipé d'un contrôle de la présence d'au moins un gaz dans l'incubateur. Par exemple, l'incubateur est équipé d'un contrôle de la présence de dioxyde de carbone dans l'incubateur et/ou de la présence d'azote dans l'incubateur et/ou de la présence de dioxygène dans l'incubateur.

Dans le cas où l'échantillon comprend des cellules vivantes, l'incubateur 9 est de préférence configuré pour maintenir l'échantillon à une température donnée et comme par exemple à une température sensiblement égale à 37 degrés Celsius (pour par exemple des cellules humaines, de primates, de porc ...). De préférence l'incubateur 9 est configuré pour permettre l'oxygénation de l'échantillon (notamment par un apport d'un mélange azote et dioxygène et une évacuation du dioxyde de carbone) cette oxygénation étant assurée par au moins le contrôle du taux de dioxyde de carbone dans l'incubateur. De préférence, l'incubateur 9 est configuré pour permettre de gérer le taux d'humidité de l'échantillon afin que l'échantillon ne se déshydrate pas. Par exemple l'incubateur 9 est muni d'un capteur permettant de s'assurer que le taux d'humidité dans l'incubateur 9 soit compris entre 70 et 100%.

L'incubateur 9 est avantageusement ici un incubateur conventionnel. Par exemple l'incubateur 9 est un incubateur H201-K commercialisé par la société Okolab.

Coupler le module 3 à un microscope du commerce permet avantageusement de pouvoir bénéficier de l'existence d'appareils déjà existants aptes à coopérer avec ledit microscope, comme par exemple des incubateurs portables, sans avoir besoin de développer de nouveaux appareils. Le dispositif d'interférence 4 va être à présent détaillé.

Le dispositif d'interférence 4 comprend un bâti portant une embase qui est immobile vis-à-vis du bâti.

Ladite embase porte un élément séparateur 10 de faisceaux non polarisant (plus connu sous l'acronyme anglais NPBS pour Non-Polarizing BeamSplitters). L'élément séparateur 10 est par exemple un cube séparateur non polarisant, une lame séparatrice non polarisante ...

La source 5 est destinée à éclairer l'élément séparateur 10. Toutefois, la source 5 n'éclaire pas directement l'élément séparateur 10. La source 5 est ainsi déportée de l'élément séparateur 10 et de l'embase. La source 5 est ainsi fixée à une portion du bâti.

En effet, le dispositif d'interférence 4 comporte une première unité de réglage 11 via laquelle la source 5 va éclairer l'élément séparateur 10.

Dans le cas présent la première unité de réglage 11 comporte au moins une surface de réflexion. Par exemple la première unité de réglage 11 comporte au moins deux surfaces de réflexion 12, 13 qui sont montées en vis-à-vis. Les surfaces de réflexion 12, 13 sont planes. Les surfaces de réflexion 12, 13 sont par exemple des miroirs.

Typiquement la première unité de réglage 11 est agencée de sorte qu'en service la source 5 éclaire directement l'une des surfaces de réflexion 12 qui réfléchit la lumière vers l'autre des surfaces de réflexion 13 qui à son tour réfléchit la lumière vers l'élément séparateur 10 de manière à l'éclairer.

Au moins une et de préférence les deux surfaces de réflexion 12, 13 sont montées mobiles vis-à-vis du bâti. La première unité de réglage 11 est conformée de sorte que les deux surfaces de réflexion 12, 13 peuvent être déplacées relativement au bâti de manière indépendantes l'une de l'autre. Par exemple au moins l'une des surfaces de réflexion et de préférence les deux surfaces de réflexion 12, 13 peuvent pivoter relativement au bâti. Par exemple, la première unité de réglage 11 comporte une première monture cinématique portant la surface de réflexion 12 (et permettant de déplacer ladite surface de réflexion 12 vis-à-vis du bâti) et une deuxième monture cinématique portant la surface de réflexion 13 (et permettant de déplacer ladite surface de réflexion 13 vis-à-vis du bâti). Grâce aux déplacements des surfaces de réflexion 12, 13, il est par exemple possible de modifier le chemin optique des rayons générés par la source 5 jusqu'à l'élément séparateur 10.

De manière particulière, le dispositif d'interférence 4 comporte une première optique 14 agencée en amont de la première unité de réglage 11 (les notions de « amont » et « aval » s'entendant selon le sens de circulation de la lumière) entre la source 5 et la première unité de réglage 11.

La première optique 14 permet notamment de réduire la divergence des rayons générés par la source 5. On limite ainsi une perte de puissance du rayonnement lumineux généré par la source 5.

La première optique 14 est par exemple une unique lentille, un unique doublet ou bien un couple de lentilles ou bien un couple de doublets. Si la première optique 14 est un couple de doublets, la première optique 14 est composée par exemple d'un premier doublet achromatique (soit un ensemble d'une lentille convergente achromatique et d'une lentille plane corrigée à l'infini en amont) et d'un deuxième doublet achromatique (soit un ensemble d'une lentille convergente achromatique et d'une lentille plane corrigée à l'infini en aval), le deuxième doublet étant agencé en aval du premier doublet. Les faces plates des lentilles sont respectivement tournées vers la source 5 et l'unité de réglage 11.

Le dispositif d'interférence 4 comporte une deuxième optique 15 agencée en aval de la première unité de réglage 11 entre la première unité de réglage 11 et l'élément séparateur 10. La deuxième optique 15 est par exemple une lentille, un doublet ... La deuxième optique 15 est par exemple un doublet achromatique comprenant une lentille convergente achromatique et de préférence une lentille convergente achromatique présentant une face plate qui est celle tournée vers la première unité de réglage 11.

Selon un mode de réalisation particulier, le dispositif d'interférence 4 comporte un premier diaphragme 16 agencé en amont de la première unité de réglage 11 entre la source 5 et la première unité de réglage 11. Par exemple le premier diaphragme 16 est agencé en aval de la première optique 14 entre la première optique 14 et la première unité de réglage 11.

Le premier diaphragme 16 est par exemple un diaphragme d'ouverture. Le premier diaphragme 16 est agencé dans un plan focal du deuxième doublet de la première optique 14 et de préférence dans le plan focal image du deuxième doublet de la première optique 14.

Ainsi la première optique 14 image la source 5 au plan focal image dudit deuxième doublet qui coïncide avec le premier diaphragme 16.

On retient ainsi que la source 5 est conjuguée au premier diaphragme 16 par l'intermédiaire de la première optique 14.

Le premier diaphragme 16 permet donc, par son ouverture, par exemple de contrôler le degré d'incohérence spatial de la source 5 et/ou la quantité de lumière reçue par l'échantillon et/ou l'ouverture numérique d'illumination de l'ensemble 1 ... Par ailleurs, le premier diaphragme 16 est également agencé dans un plan focal de la deuxième optique 15 et de préférence dans le plan focal objet de la deuxième optique 15.

Par ailleurs, la focale de la deuxième optique 15 doit être inférieure ou égale à la distance séparant la première optique 14 du premier diaphragme 16.

Par « diaphragme » on entend pour la présente description tout organe permettant de contrôler le passage du rayonnement lumineux généré par la source 5 : diaphragme à iris, trou dans une paroi dédiée ...

Selon un mode de réalisation particulier, le dispositif d'interférence 4 comporte un deuxième diaphragme 17 agencé en aval de la première unité de réglage 11 entre la première unité de réglage 11 et l'élément séparateur 10. Par exemple le deuxième diaphragme 17 est agencé en aval de la deuxième optique 15 entre la deuxième optique 15 et l'élément séparateur 10.

Le deuxième diaphragme 17 est un diaphragme de champ.

Le deuxième diaphragme 17 permet de restreindre l'illumination de l'échantillon pour n'illuminer que la portion de l'échantillon qui sera imagée par l'ensemble 1 et/ou de réduire les réflexions incohérentes.

Dans l'exemple illustré à la figure unique, en amont de l'élément séparateur 10 se trouve ainsi successivement la source 5, la première optique 14, le premier diaphragme 16, la première unité de réglage 11, la deuxième optique 15 et le deuxième diaphragme 17. La première optique 14, le premier diaphragme 16, la deuxième optique 15 et le deuxième diaphragme 17 sont fixes dans le module 3.

Par exemple, la deuxième optique 15 et le deuxième diaphragme 17 sont portés par l'embase. Typiquement la deuxième optique 15 et le deuxième diaphragme 17 sont agencés dans le prolongement de l'élément séparateur 10.

De préférence, la source 5, la première optique 14 et le premier diaphragme 16 sont portés par une même portion du bâti et ce de manière déportée de l'embase.

La source 5 vient donc éclairer l'élément séparateur 10 ce qui permet de définir un « bras d'éclairage » dudit élément séparateur 10.

Par ailleurs, il est connu que l'élément séparateur 10 permet de former deux bras suite à son éclairement par la source :
- un bras dit « bras de référence » qui est associé à la surface de réflexion 6 ,
- un bras dit « bras objet » qui est associé, en fonctionnement, à l'échantillon.

La source 5 n'est donc ni sur le bras objet ni sur le bras de référence mais est bien sur le bras d'éclairage.

En revanche la surface de réflexion 6 est sur le bras de référence. Le dispositif d'interférence 4 comporte également une deuxième unité de réglage 18 via laquelle la surface de réflexion 6 va pouvoir interagir avec des rayons se propageant depuis l'élément séparateur 10 sur le bras de référence.

Typiquement la deuxième unité de réglage 18 comporte au moins une surface de réflexion 27. En particulier, la deuxième unité de réglage 18 est agencée de sorte qu'en service, un rayon en provenance de l'élément séparateur 10 se réfléchisse sur la surface de réflexion 27 pour atteindre la surface de réflexion 6.

La surface de réflexion 27 est plane. La surface de réflexion 27 est par exemple un miroir.

De préférence ladite surface de réflexion 27 est montée mobile vis-à-vis du bâti du module 3. Par exemple la surfaces de réflexion 27 peut pivoter relativement au bâti. Par exemple, la deuxième unité de réglage 18 comporte une monture cinématique portant la surface de réflexion 27 (et permettant de déplacer ladite surface de réflexion 27 vis-à-vis du bâti).

Grâce aux déplacements de la surface de réflexion 27, il est ainsi possible de modifier le chemin optique des rayons réfléchis par la surface de réflexion 6 jusqu'à l'élément séparateur de faisceaux 10.

De préférence, la surface de réflexion 6 est elle-même montée mobile dans le dispositif d'interférence 4 relativement au bâti afin de pouvoir être déplacée relativement à l'échantillon lors de l'étude de celui-ci. Par exemple, la surface de réflexion 6 est montée sur une base qui est déplaçable en translation vis-à-vis du bâti. Par exemple la base est déplaçable en translation vis-à-vis du bâti par l'intermédiaire d'au moins un actionneur piézo-électrique. Par exemple la base est déplaçable selon un mouvement de translation parallèle mais non confondu à l'axe optique de la source 5.

Le dispositif d'interférence 4 comporte ici une troisième optique 19 agencée entre l'élément séparateur 10 et la surface de réflexion 6. La troisième optique 19 est par exemple une lentille, un doublet ... La troisième optique 19 est par exemple un doublet achromatique comprenant une lentille convergente achromatique et de préférence une lentille convergente achromatique présentant une face plate qui est celle tournée vers l'élément séparateur 10.

La troisième optique 19 permet par exemple de faciliter un équilibrage entre le bras objet et le bras référence et/ou d'illuminer correctement (i.e. sur un grand champ) la surface de réflexion 27.Par ailleurs, l'ensemble 1 comprend un premier objectif 20 et un deuxième objectif 21. Les deux objectifs 20, 21 sont identiques et sont associés à respectivement l'un des bras. Les deux objectifs ont une ouverture numérique (plus connue sous l'acronyme anglais NA pour « numerical aperture ») identique.

Optionnellement, l'ouverture numérique des objectifs est haute. Par « haute » on entend une ouverture numérique supérieure à 0.8 et de préférence supérieure à 1 pour la présente demande.

On retient que la deuxième optique 15 permet d'imager la source 5 sur un plan focal des deux objectifs et par exemple sur le plan focal objet des deux objectifs 20, 21.

Le premier objectif 20 fait partie du module 3 et ici du dispositif d'interférence 4. Ainsi le premier objectif 20 est agencé dans le module 3 au niveau de la surface de réflexion 6. L'axe optique du premier objectif 20 est par exemple normal à un plan selon lequel s'étend la surface de réflexion 6.

Plus précisément ici, le premier objectif 20 est agencé de sorte que la surface de réflexion 6 se trouve dans un des foyers du premier objectif et par exemple au foyer image du premier objectif 20. Le premier objectif 20 est donc sur le bras de référence.

De préférence, la deuxième unité de réglage 18 comporte également un organe de déplacement 26 du premier objectif 20 relativement au bâti et en particulier relativement à la surface de réflexion 6. Par exemple le premier objectif 20 est porté par un piétement qui est déplacé via l'organe de déplacement. Par exemple l'organe de déplacement est configuré pour pouvoir déplacer le premier objectif 20 selon au moins deux axes de translation. Par exemple l'organe de déplacement est configuré pour pouvoir déplacer le premier objectif 20 au moins dans un plan normal à l'axe selon lequel la surface de réflexion 6 peut être déplacée vis-à-vis du bâti.

Dans l'exemple illustré à la figure unique, en aval de l'élément séparateur 10, côté bras de référence, se trouve ainsi successivement la troisième optique 19, la deuxième unité de réglage 18, le premier objectif 20 (associé à l'organe de déplacement 26) et la surface de réflexion 6. Par ailleurs, le deuxième objectif 21 ne fait pas partie du module 3. En réalité le deuxième objectif 21 est directement l'objectif (ou l'un des objectifs) du microscope 2. L'échantillon est destiné à être positionné à l'un des foyers du deuxième objectif 21 et par exemple au foyer image du deuxième objectif 21.

En conséquence, le deuxième objectif 21 est sur le bras objet lorsque le microscope 2 et le module 3 sont couplés. On comprend donc que du fait que le deuxième objectif 21 soit celui du microscope, le module 3 seul ne peut suffire à former un interféromètre complet.

Du fait que le microscope 2 est un microscope inversé, le deuxième objectif 21 est agencé de sorte à observer l'échantillon par le dessous de l'échantillon. Par exemple le deuxième objectif 21 est agencé sous la platine et dans le cas présent sous l'incubateur 9.

De façon connue en soi, le microscope 2 comporte une surface de réflexion 22 de sorte qu'un rayon traversant le deuxième objectif 21 selon l'axe optique dudit deuxième objectif 21 puisse être réfléchi jusqu'à la sortie optique du microscope 2.

Typiquement, la surface de réflexion 22 est plane. Par exemple, la surface de réflexion 22 est un miroir et par exemple un miroir épais et par exemple un miroir présentant une épaisseur supérieure ou égale à 3 millimètres et par exemple une épaisseur supérieure ou égale à 4 millimètres. De préférence ladite surface de réflexion 22 est un miroir plan porté par un prisme ou bien un miroir plan porté par un cube.

Dans le cas présent, ladite surface de réflexion 22 est agencée de sorte qu'un rayon se propageant selon l'axe optique du deuxième objectif 21 soit ensuite propagé, après réflexion sur la surface de réflexion 22, pour sortir via la sortie optique du microscope 2. Lorsque le module 3 est connecté au microscope 2, un tel rayon se propage ainsi depuis ladite sortie jusqu'à l'élément séparateur 10 le long du bras objet.

Le dispositif d'interférence 4 comporte par ailleurs une quatrième optique 23 agencée entre l'élément séparateur 10 et une sortie « bras objet » du module i.e. la sortie du module couplée au moins optiquement avec la sortie optique du microscope 2. La quatrième optique 23 est par exemple une lentille, un doublet ... La quatrième optique 23 est par exemple un doublet achromatique comprenant une lentille convergente achromatique et de préférence une lentille convergente achromatique présentant une face plate qui est celle tournée vers l'élément séparateur 10. De préférence, la quatrième optique 23 est associée à au moins un organe de déplacement de la quatrième optique 23 relativement au bâti et notamment vis-à-vis de l'élément séparateur 10 (en particulier pour approcher ou reculer la quatrième optique 23 de l'élément séparateur 10). Par exemple la quatrième optique 23 est portée par un piètement qui est déplacé via l'organe de déplacement. Par exemple l'organe de déplacement est configuré pour déplacer la quatrième optique 23 selon au moins une translation. Par exemple l'organe de déplacement est configuré pour déplacer la quatrième optique 23 selon au moins une translation le long de l'axe de travail du module (i.e. l'axe selon lequel la majorité des rayons lumineux se propageant sur le bras objet sortent du module pour atteindre le microscope).

De préférence, la quatrième optique 23 est agencée dans le module de sorte à être placée la plus proche possible de la surface de réflexion 22. Ainsi de préférence, la quatrième optique 23 est agencée de sorte que la distance entre le deuxième objectif 21 et la quatrième optique 23 soit égale à la distance focale de ladite quatrième optique 23.

Ceci évite d'avoir une illumination non homogène de la source. En outre, on limite ainsi une perte de puissance du rayonnement lumineux généré par la source 5 au niveau de l'échantillon.

La troisième optique 19 est agencée de sorte qu'un plan focal de la troisième optique 19 coïncide avec un plan focal du premier objectif 20 par exemple que le plan focal image de la troisième optique 19 coïncide avec le plan focal objet du premier objectif 20.

La quatrième optique 23 est agencée de sorte qu'un plan focale de la quatrième optique 23 coïncide avec un plan focal du deuxième objectif 21 par exemple que le plan focal image de la quatrième optique 23 coïncide avec le plan focal objet du deuxième objectif 21.

De préférence, le deuxième diaphragme 17 est agencé dans un plan focal de la quatrième optique 23 par l'intermédiaire de l'élément séparateur 10, et par exemple dans le plan focal objet de la quatrième optique 23. Ainsi le deuxième diaphragme 17 est conjugué à l'échantillon par l'intermédiaire du deuxième objectif 21 (l'échantillon étant à un foyer du deuxième objectif 21 et par exemple au foyer image du deuxième objectif).

De préférence, le deuxième diaphragme 17 est agencé dans un plan focal de la troisième optique 19 par l'intermédiaire de l'élément séparateur 10, et par exemple dans le plan focal objet de la troisième optique 19.

Pour la symétrisation du bras objet et du bras de référence, la troisième optique 19 et la quatrième optique 23 doivent être agencées de manière identique vis-à-vis de l'élément séparateur 10.

En outre, le module 3 comporte une cinquième optique 24 agencée à la sortie du dispositif d'interférence 4 c'est-à-dire agencée entre l'élément séparateur 10 et le dispositif d'acquisition 7. La cinquième optique 24 peut faire partie du dispositif d'interférence 4 ou peut ne pas faire partie dudit dispositif d'interférence 4.

Par exemple la cinquième optique 24 est une unique lentille, un unique doublet ou bien un couple de lentilles ou bien un couple de doublets. Si la cinquième optique 24 est un couple de doublets, la cinquième optique 24 est composée par exemple d'un premier doublet achromatique (soit un ensemble d'une lentille convergente achromatique et d'une lentille plane corrigée à l'infini en amont) et d'un deuxième doublet achromatique (soit un ensemble d'une lentille convergente achromatique et d'une lentille plane corrigée à l'infini en aval), le deuxième doublet étant agencé en aval du premier doublet. Les faces plates des lentilles sont respectivement tournées vers le dispositif d'acquisition 7 et l'élément séparateur 10.

La cinquième optique 24 est agencée pour conjuguer les plans situés aux foyers des deux objectifs 20, 21 (par exemple les plans situés aux foyers images des deux objectifs 20, 21) dans un même plan en sortie du dispositif d'interférence 4. De préférence, le capteur optique du dispositif d'acquisition 7 est placé dans ce dernier plan. Le capteur optique est ainsi agencé dans un plan focal de la cinquième optique 24 et par exemple dans le plan focal image de la cinquième optique 24.

De préférence, un plan focal de la quatrième optique 23 est conjugué à un plan focal de la cinquième optique 24 et par exemple un plan focal image de la quatrième optique 23 est conjugué au plan focal objet de la cinquième optique 24.

De préférence, le dispositif d'interférence 4 comporte un troisième diaphragme 25 agencé en amont de la cinquième optique 24, entre la cinquième optique 24 et l'élément séparateur 10. Le troisième diaphragme 25 est un diaphragme de champ.

Ce troisième diaphragme permet de régler la position optique du capteur optique et par exemple de réduire les réflexions incohérentes.

Le deuxième diaphragme 17 est ainsi agencé de sorte à être conjugué à la troisième optique 19 et à la quatrième optique 23 et à la cinquième optique 24 par l'intermédiaire de l'élément séparateur 10.

Par ailleurs, le troisième diaphragme 25 est agencé dans un plan focal de la troisième optique 19 par l'intermédiaire de l'élément séparateur 10, et par exemple dans un plan focal image de la troisième optique 19. Ainsi le troisième diaphragme 25 est conjugué à la surface de réflexion 6 par l'intermédiaire du premier objectif 20 (la surface de réflexion 6 étant à un des foyers du premier objectif 20 et par exemple au foyer image du premier objectif 20). Par ailleurs, le troisième diaphragme 25 est agencé dans un plan focal de la quatrième optique 23 par l'intermédiaire de l'élément séparateur 10. Par exemple le troisième diaphragme 25 est agencé dans le plan focal image de la quatrième optique 23 par l'intermédiaire de l'élément séparateur 10.

Le troisième diaphragme 25 et le capteur optique sont par ailleurs conjugués (par l'intermédiaire de la cinquième optique 24).

On retient qu'avec la configuration décrite on « image » la source 5 (i.e on crée son image agrandie au niveau du premier diaphragme 16). Cet agrandissement est généré par le couple deuxième optique 15/ troisième optique 23.

Ceci permet de réduire la divergence des rayons générés par la source 5 et/ou de réduire une ouverture numérique de l'illumination généré par la source 5.

Il convient toutefois de s'assurer que l'agrandissement généré par le couple deuxième optique 15/ troisième optique 23 de l'image de la source 5 ne soit pas être plus grand que les dimensions d'une pupille de l'utilisateur au plan focal objet du premier objectif 20 et du deuxième objectif 21.

Ceci permet de conserver le caractère incohérent de la source 5 (ou faiblement cohérent) et/ou de limiter une perte de puissance du rayonnement lumineux généré par la source 5.

De préférence, la ou les focales de la première optique 14 sont ainsi choisies en fonction du caractère divergent de la source 5, de la distance entre la source 5 et chacun des objectifs 20, 21 et de la dimension d'une pupille d'un utilisateur aux plans focaux objets des objectifs 20, 21. Par ailleurs, le premier diaphragme 16 est conjugué, par l'intermédiaire de la deuxième optique 15 et du couple troisième optique 19/quatrième optique 23, à des plans focaux des objectifs 20, 21 et par exemple à des plans focaux objets des objectifs 20, 21.

En outre, la quatrième optique 23 permet d'imager le deuxième diaphragme 17 sur l'échantillon. De préférence, le deuxième diaphragme 17 est placé à la distance focale de la deuxième optique 15.

La configuration décrite est ainsi une mise en pratique du principe de l'illumination de Koehler.

On comprend aisément que le positionnement relativement du deuxième objectif 21 d'une part vis-à-vis de la source 5 et de la surface de réflexion 6 d'autre part est essentiel. Quand le microscope 2 est couplé au module 3, l'axe optique du deuxième objectif 21 se trouve de fait dans une position fixée vis-à-vis de l'axe de travail du module 3. Néanmoins, les deux unités de réglage 11, 18 permettent de positionner correctement la source 5 et la surface de réflexion 6 vis-à-vis du deuxième objectif 21 et ce afin notamment de permettre la génération d'interférences entre les ondes de référence et les ondes objet.

En particulier la surface de réflexion 27 est configurée pour (grâce à son déplacement relatif vis-à-vis du bâti) aligner le groupe élément séparateur 10/troisième optique 19/surface de réflexion 18/premier objectif 20 avec le groupe élément séparateur/quatrième optique 23/surface de réflexion 22/deuxième objectif.

Le module 3 est ainsi aisément inséré dans le microscope 2 puis l'on vient régler les caractéristiques du module 3 via les deux unités de réglages 11, 18 pour aligner optiquement le module 3 et le microscope 2. Par exemple on s'appuie sur l'unité de réglage 18 (comprenant en particulier l'organe de déplacement 26) pour rendre identique le bras de référence au bras objet (sur lequel il est plus difficile d'agir la distance entre le deuxième objectif 21 et la sortie optique du microscope 2 étant fixe) et on s'appuie sur l'unité de réglage 11 pour modifier le bras d'éclairage si besoin afin d'aligner l'axe de travail du module 3 avec l'axe de propagation de la source 5.

Grâce aux unités de réglages 11, 18, le module 3 peut être ainsi raccordé à différents microscopes présents sur le marché.

L'ensemble 1 ainsi décrit est une amélioration d'un interféromètre de Linnik dans une configuration d'illumination de Koehler.

Dans l'ensemble 1 ainsi décrit, l'élément séparateur 10 est bien plus éloigné des deux objectifs 20, 21 que dans les systèmes de l'art antérieur. Ceci permet avantageusement de pouvoir coupler le module 3 à un microscope conventionnel. Ceci permet aussi de pouvoir utiliser des objectifs (le premier objectif 20 comme le deuxième objectif 21) présentant une plus grande ouverture numérique.

Par ailleurs, la présence d'au moins une optique en aval de l'élément séparateur 10, côté bras objet, permet d'améliorer la qualité des images issues des signaux générés dans l'ensemble 1. En particulier, avec cette configuration, les réflexions incohérentes se retrouvent réduites par le troisième diaphragme 25 puis spatialement confinées au centre d'une surface d'acquisition du capteur optique (lorsque ladite surface d'acquisition est centrée vis-à-vis d'un axe normal à une surface de séparation de l'élément séparateur)). Il s'avère donc plus aisé pour le dispositif de traitement 8 de séparer lesdites réflexions incohérentes des réflexions cohérentes et ainsi d'obtenir une image de meilleure qualité.

A partir de l'ensemble 1 décrit, il est possible d'effectuer de l'imagerie de tomographie à cohérence optique plein champ statique comme d'effectuer de l'imagerie de tomographie à cohérence optique plein champ dynamique.

Dans le cas de l'imagerie de tomographie à cohérence optique plein champ dynamique, un échantillon est placé dans le microscope 2 et une succession temporelle de N signaux interférométriques bidimensionnels d'une tranche de l'échantillon est acquise par le dispositif d'acquisition 7 à différence de marche fixe entre le bras objet et le bras de référence. Par exemple la différence de marche est maintenue fixe en maintenant à une position fixe à la fois la surface de réflexion 6 et l'échantillon. A cet effet le dispositif de traitement 8 est ici configuré pour synchroniser le dispositif d'acquisition 7 (et notamment son capteur optique) avec l'actionneur permettant le déplacement de la surface de réflexion 6. Par exemple, en plus d'un ordinateur le dispositif de traitement 8 peut également comporter une carte d'acquisition connecté à l'ordinateur pour assure cette synchronisation.

Par ailleurs, il est possible d'effectuer de l'imagerie de tomographie à cohérence optique plein champ avec l'incubateur ou sans l'incubateur.

En conséquence l'ensemble décrit permet de mettre en œuvre de nombreuses possibilités d'imagerie.

Grâce à l'ensemble décrit 1, il est par exemple possible d'acquérir des images de cellules, mais également de visualiser l'activité cellulaire et de distinguer l'état métabolique d'une cellule. Les cellules peuvent par exemple être des cultures en deux dimensions telles que des cultures en deux dimensions monocouche, des cultures en trois dimensions telles que des organoïdes ou bien d'autres cultures en trois dimensions multicouche ...

Il est en effet possible d'étudier les cellules de manière invasive mais non destructive. Une des forces de l'ensemble 1 décrit est donc son habilité à imager sans perturber le milieu naturel. L'ensemble 1 ainsi décrit peut être utilisé par exemple pour l'étude d'organoïdes, de cultures en deux dimensions monocouche, de cultures en trois dimensions multicouches, de rétines et de cornées, l'étude d'explants de rétines et de cornées de souris, de porc, de macaque..., le contrôle qualité de la production d'organoïdes à grande échelle, aider dans le domaine micro-fluidique, le domaine de l'optogenétique (par exemple par photo-stimulation pour l'optophysiologie), la modélisation de maladies, pour effectuer des tests d'efficacité de nouveaux traitements (géniques, pharmaceutiques, etc.), pour une greffe ...

Par ailleurs, l'ensemble 1 décrit permet tout aussi bien de générer un signal statique permettant de visualiser la structure en trois dimensions d'un tissu qu'un signal dynamique permettant d'identifier les cellules d'un tissu et d'en mesurer par exemple leur métabolisme.

D'autres applications de l'ensemble 1 décrit sont envisageables comme par exemple toutes études de microscopie à haute résolution spatiale (par exemple une résolution comprise entre 100 et 400 nanomètres) et/ou temporelle (par exemple une résolution de l'ordre de la milliseconde comme par exemple 2 millisecondes) en particulier celles excluant la destruction de l'échantillon et/ou intégrant l'absence de marqueurs endogènes.

De plus, il est possible de générer un suivi en temps réel d'un échantillon avec par exemple la génération d'une image présentant un contraste reflétant des mécanismes de mouvements de l'ordre de X millisecondes, X étant compris entre 100 et 200 millisecondes, X étant par exemple de 160 millisecondes.

Bien entendu, l'invention n'est pas limitée au mode de réalisation décrit mais englobe toute variante entrant dans le champ de l'invention telle que définie par les revendications.

En particulier, l'incubateur pourra faire partie ou non de l'ensemble et/ou le dispositif d'acquisition pourra faire partie ou non de l'ensemble et/ou le dispositif de traitement pourra faire partie ou non de l'ensemble et/ou la source pourra faire partie ou non de l'ensemble.

En outre, le dispositif d'acquisition pourra faire partie ou non du module et/ou le dispositif de traitement pourra faire partie ou non du module et/ou la source pourra faire partie ou non du module.

Le module pourra comporter une ou plusieurs lames de verre pour limiter les phénomènes de dispersion.

Dans le cas où le microscope utilisé ne serait pas pourvu d'une surface plane de réflexion entre son objectif et une sortie optique, on pourra bien entendu équiper le microscope d'une telle surface plane. Par exemple on pourra agencer une telle surface plane de réflexion dans le module entre la quatrième optique et la sortie de travail du module ou bien encore agencer une telle surface plane dans un autre module lui-même inséré dans une des rangées du microscope pour être associé à l'invention.

Bien qu'ici le module soit couplé au microscope par simple insertion du module dans le microscope, en complément ou en remplacement, le module et le microscope pourront être couplés ensemble par coopération l'un d'un connecteur mâle et l'autre d'un connecteur femelle, les deux connecteurs étant aptes à coopérer ensemble pour la connexion du module au microscope. Par exemple le module pourra comporter un connecteur mâle et le microscope un connecteur femelle. Par exemple le module comporte une tige filetée apte à être vissée dans un orifice fileté correspondant du microscope. Le microscope de l'ensemble pourra être un microscope sans tourelle.

Le microscope de l'ensemble pourra ne pas être un microscope inversé. L'illumination de l'échantillon pourra ainsi être effectuée par le haut (la collection du signal par le deuxième objectif s'effectuant alors préférentiellement par le haut également) comme par le bas (la collection du signal par le deuxième objectif s'effectuant alors préférentiellement par le bas également).

On pourra ne pas avoir la troisième optique. La troisième optique pourra être incluse dans le microscope et non dans le module.

Le capteur optique pourra être différent de ce qui a été indiqué par exemple le capteur optique pourra être un capteur à couplage de charge (plus connu sous le terme anglais CCD pour Charge-Coupled Device). Le capteur optique pourra être apte à travailler dans le visible et/ou dans un autre domaine comme par exemple dans l'infra-rouge. Ainsi, le capteur optique pourra être un capteur d'image proche infra-rouge (plus connu sous le terme anglais de capteur SWIR pour Short-Wave-Infrared). Le capteur optique pourra par exemple être un capteur InGaAs (pour arséniure d'indium-gallium) ou encore un capteur SWIR InGaAs. Le module et/ou l'ensemble pourra être conformé de sorte que le capteur optique (et/ou le dispositif d'acquisition) soit interchangeable afin par exemple de pouvoir travailler dans le visible puis ensuite de pouvoir travailler dans un autre domaine que le visible et par exemple dans l'infra-rouge. L'ensemble pourra ne pas comporter d'incubateur (portable ou non). L'ensemble pourra comporter une enceinte chauffante dans lequel est au moins agencé le microscope pour pouvoir par exemple maintenir l'échantillon à une température donnée.

Bien qu'ici les optiques présentent toutes des lentilles avec au moins une face plate, les lentilles pourront être conformées autrement. Les lentilles pourront par ailleurs être orientées différemment que ce qui a été indiqué. De préférence, on agencera une lentille dans le module de sorte que le faisceau lumineux ayant un angle d'ouverture le plus important (entre le faisceau luminant entrant ou sortant) soit associé à la face de la lentille la plus plane.

Bien qu'ici on utilise des objectifs à haute ouverture numérique, on pourra bien entendu utiliser des objectifs à ouverture numérique de plus basse valeur.

## Revendications

1. Module destiné à être associé à un microscope pour une imagerie microscopique de tomographie à cohérence optique en plein champ d'au moins un échantillon, le module comprenant un dispositif d'interférence (4) comprenant un élément séparateur (10) de faisceaux non polarisant, le dispositif comprenant par ailleurs au moins une première surface de réflexion (6), le dispositif étant ainsi apte en service à permettre la production d'au moins une interférence entre :
• au moins une onde de référence obtenue par réflexion de la lumière émise par une source lumineuse associée au module sur la surface de réflexion, et
• au moins une onde objet obtenue par rétrodiffusion de la lumière émise par ladite source sur l'échantillon,
l'élément séparateur de faisceaux non polarisant permettant ainsi en service de former deux bras, lors de son éclairement par la source, à savoir un « bras de référence » associé à la surface de réflexion et un « bras objet » associé à l'échantillon, le dispositif comprenant par ailleurs :
- une première unité de réglage (11) agencée en amont de l'élément séparateur de faisceaux non polarisant pour pouvoir modifier en service un bras d'éclairage de l'élément séparateur de faisceaux non polarisant, et/ou
- au moins une deuxième unité de réglage (18) agencée entre l'élément séparateur de faisceaux et la surface de réflexion pour pouvoir modifier en service le bras de référence.

2. Module selon la revendication 1, dans lequel la première unité de réglage (11) comporte au moins deux surfaces de réflexion (12, 13), au moins une desdites surfaces de réflexion étant déplaçable vis-à-vis d'un bâti du module.

3. Module selon la revendication 1 ou la revendication 2, comprenant un objectif (20) associé au bras de référence, la deuxième unité de réglage (18) comportant au moins une surface de réflexion additionnel (18) et au moins un organe de déplacement (26) dudit objectif vis-à-vis d'un bâti du module.

4. Module selon la revendication 3, dans lequel la surface de réflexion additionnel (18) et également déplaçable vis-à-vis d'un bâti du module.

5. Module selon la revendication 3 ou la revendication 4, dans lequel l'organe de déplacement (26) est configuré pour déplacer l'objectif au moins dans un plan parallèle au plan dans lequel s'étend la première surface de réflexion (6).

6. Module selon l'une des revendications précédentes, dans lequel la source (5) fait partie du module.

7. Module selon l'une des revendications précédentes, comprenant un dispositif d'acquisition (7) adapté pour acquérir au moins un signal résultant des interférences entre les ondes de références et les ondes objet.

8. Module selon l'une des revendications précédentes, dans lequel le dispositif d'interférence (10) comporte une optique (23) agencée entre l'élément séparateur (10) et une sortie du module destinée à être couplée au moins optiquement le microscope.

9. Ensemble comprenant un microscope (2) et un module selon l'une des revendications précédentes.

10. Ensemble selon la revendication 9, dans lequel le microscope (2) comporte une tourelle, le module étant agencé dans un des casiers de la tourelle.

11. Ensemble selon la revendication 9 ou la revendication 10, comprenant un incubateur (9) porté par une platine du microscope.

## Patentansprüche

1. Modul zur Verbindung mit einem Mikroskop für mikroskopische Bildgebung mittels optischer Kohärenztomographie im Vollfeldbereich mindestens einer Probe, wobei das Modul eine Interferenzvorrichtung (4) umfasst, die ein nicht polarisierendes Strahlteilungselement (10) umfasst, wobei die Vorrichtung ferner mindestens eine erste Reflexionsfläche (6) umfasst, wobei die Vorrichtung somit während des Betriebs in der Lage ist, die Erzeugung mindestens einer Interferenz zu ermöglichen zwischen:
• mindestens einer Referenzwelle, die durch Reflexion von Licht entsteht, das von einer dem Modul zugehörigen Lichtquelle auf die reflektierende Fläche ausgestrahlt wird, und
• mindestens einer Objektwelle, die durch Rückstreuung von Licht entsteht, das von der Quelle auf die Probe ausgestrahlt wird,
wobei das nicht polarisierende Strahlteilungselement somit während des Betriebs bei Ausleuchtung durch die Lichtquelle die Bildung von zwei Armen ermöglicht, nämlich eines "Referenzarms", der der Reflexionsfläche zugeordnet ist, und eines "Objektarms", der der Probe zugeordnet ist, wobei die Vorrichtung ferner umfasst:
- eine erste Einstelleinheit (11), die vor dem nicht polarisierenden Strahlteilungselement angeordnet ist, um während des Betriebs einen Beleuchtungsarm des nicht polarisierenden Strahlteilungselements verändern zu können, und/oder
- mindestens eine zweite Einstelleinheit (18), die zwischen dem Strahlteilungselement und der Reflexionsfläche angeordnet ist, um den Referenzarm während des Betriebs verändern zu können.

2. Modul nach Anspruch 1, wobei die erste Einstelleinheit (11) mindestens zwei Reflexionsflächen (12, 13) umfasst, wobei mindestens eine dieser Reflexionsflächen gegenüber einem Rahmen des Moduls verschiebbar ist.

3. Modul nach Anspruch 1 oder Anspruch 2, umfassend ein dem Referenzarm zugeordnetes Objektiv (20), wobei die zweite Einstelleinheit (18) mindestens eine zusätzliche Reflexionsfläche (18) und mindestens ein Element (26) zum Verschieben des Objektivs gegenüber einem Rahmen des Moduls umfasst.

4. Modul nach Anspruch 3, wobei die zusätzliche Reflexionsfläche (18) ebenfalls gegenüber einem Rahmen des Moduls verschiebbar ist.

5. Modul nach Anspruch 3 oder Anspruch 4, wobei das Verschiebungselement (26) ausgebildet ist, um das Objektiv zumindest in einer Ebene parallel zu der Ebene zu verschieben, in der sich die erste Reflexionsfläche (6) erstreckt.

6. Modul nach einem der vorstehenden Ansprüche, wobei die Quelle (5) Teil des Moduls ist.

7. Modul nach einem der vorstehenden Ansprüche, das eine Erfassungsvorrichtung (7) umfasst, die ausgelegt ist, um mindestens ein Signal zu erfassen, das aus den Interferenzen zwischen den Referenzwellen und den Objektwellen resultiert.

8. Modul nach einem der vorstehenden Ansprüche, wobei die Interferenzvorrichtung (10) eine Optik (23) umfasst, die zwischen dem Teilungselement (10) und einem Ausgang des Moduls angeordnet ist, der dazu vorgesehen ist, zumindest optisch mit dem Mikroskop verbunden zu werden.

9. Anordnung, die ein Mikroskop (2) und ein Modul nach einem der vorstehenden Ansprüche umfasst.

10. Anordnung nach Anspruch 9, wobei das Mikroskop (2) einen Revolver umfasst, wobei das Modul in einer der Kammern des Revolvers angeordnet ist.

11. Anordnung nach Anspruch 9 oder Anspruch 10, die einen Inkubator (9) umfasst, der auf einem Tisch des Mikroskops angeordnet ist.

## Claims

1. Module intended to be associated with a microscope for full-field optical coherence tomography microscopic imaging of at least one sample, the module comprising an interference device (4) comprising a non-polarising beam splitter element (10), the device further comprising at least one first reflection surface (6), the device thus being capable, during operation, of allowing at least one interference to be produced between:
• at least one reference wave obtained by reflecting the light emitted by a light source associated with the module on the reflection surface and
• at least one object wave obtained by backscattering the light emitted by said source onto the sample,
the non-polarising beam splitter element thus making it possible, during operation, when it is illuminated by the source, to form two arms, namely a "reference arm" associated with the reflection surface and an "object arm" associated with the sample, the device further comprising:
- a first adjustment unit (11) arranged upstream of the non-polarising beam splitter element for allowing an illumination arm of the non-polarising beam splitter element to be modified during operation, and/or
- at least one second adjustment unit (18) arranged between the beam splitter element and the reflection surface for allowing the reference arm to be modified during operation.

2. Module according to claim 1, wherein the first adjustment unit (11) comprises at least two reflection surfaces (12, 13), at least one of said reflection surfaces being movable relative to a frame of the module.

3. Module according to claim 1 or claim 2, comprising an objective (20) associated with the reference arm, the second adjustment unit (18) comprising at least one additional reflection surface (18) and at least one member (26) for moving said objective relative to a frame of the module.

4. Module according to claim 3, wherein the additional reflection surface (18) is also movable relative to a frame of the module.

5. Module according to claim 3 or claim 4, wherein the movement member (26) is configured to move the objective at least in a plane parallel to the plane in which the first reflection surface (6) extends.

6. Module according to any of the preceding claims, wherein the source (5) is part of the module.

7. Module according to any one of the preceding claims, comprising an acquisition device (7) suitable for acquiring at least one signal resulting from the interference between the reference waves and the object waves.

8. Module according to any one of the preceding claims, wherein the interference device (10) comprises an optic (23) arranged between the splitter element (10) and a module output intended to be at least optically coupled to the microscope.

9. Assembly comprising a microscope (2) and a module according to any one of the preceding claims.

10. Assembly according to claim 9, wherein the microscope (2) comprises a turret, the module being arranged in one of the compartments of the turret.

11. Assembly according to claim 9 or claim 10, comprising an incubator (9) supported by a stage of the microscope.
